Europäisches Patentamt

European Patent Office

Office européen des brevets

(19)

(11) Publication number: **0 014 549**
**B1**

(12) **EUROPEAN PATENT SPECIFICATION**

(45) Date of publication of patent specification: **09.03.83**

(51) Int. Cl.³: **G 02 B 13/24,** G 02 B 11/30

(21) Application number: **80300232.8**

(22) Date of filing: **24.01.80**

(54) **Objective lens for reading videodiscs.**

(30) Priority: **25.01.79 US 6327**

(43) Date of publication of application:
**20.08.80 Bulletin 80/17**

(45) Publication of the grant of the patent:
**09.03.83 Bulletin 83/10**

(84) Designated Contracting States:
**AT BE CH DE FR GB IT LU NL SE**

(56) References cited:
**DE - A - 1 472 269**
**DE - A - 2 643 153**
**GB - A - 1 385 723**
**US - A - 2 826 116**

(73) Proprietor: **DISCOVISION ASSOCIATES**
**P.O. Box 6600 3300 Hyland Avenue**
**Costa Mesa California 92626 (US)**

(72) Inventor: **Mickleson, Lee**
**4631, Warwood Drive**
**Long Beach, Califonia 90808 (US)**

(74) Representative: **Arthur, George Fitzgerald et al,**
**KILBURN & STRODE 30, John Street**
**London WC1N 2DD (GB)**

Courier Press, Leamington Spa, England.

## Objective lens for reading videodiscs

The present invention relates to an objective lens for reading videodiscs and, more particularly, to an objective lens for recovering high-density information from recorded discs.

For objective lenses to be used in reproducing systems for videodiscs, it is required to guarantee a resolving power of at least $1\mu$ due to the fact that the objective lens must recover very small signals recorded at a high density. Moreover, the information recovered from the disc, which rotates at high speed, provides information for directing the objective lens to follow the recorded track, information for automatic focusing, and information provided for controlling the speed of rotation of the videodisc in addition to the stored video information. To ensure that the objective lens recovers those kinds of information correctly, the flatness of field focussed by the objective lens should be high. To prevent the objective lens from contacting the videodisc and the objective lens, the working distance of the objective lens should be long. Further, to accomplish automatic focussing, the objective lens should be compact and light in weight. As the light source provided for generation of light provided to the objective lens is generally of the monochromatic type, (for example with a wavelength of 632.8 nm) the signal to noise ratio of the amplified signal after recovery by a photodetector will be as high as possible if the objective lens is highly transparent to light of this wavelength. For maximum transparency, there will be a minimum of single lenses constituting the objective lens and the lens surfaces may carry multilayer anti-reflection coatings.

An object of the invention is to provide an objective lens for reading videodiscs for which the working distance is large, the flatness of field is high, the resolving power is high and further, the objective lens is so corrected as to compensate for aberrations introduced by additional elements fixed in the optical path and occurring in the long conjugate of the objective lens. According to the present invention the objective lens is a modified Gauss-type lens system as disclosed in US—A—4 077 704, comprising five single lenses, i.e. a first, second, third, fourth and fifth lens. The first lens in order from the object side is a positive lens with its planar surface positioned toward the object side, the second lens is a positive lens, the third lens is a negative meniscus lens with its convex surface positioned toward the object side, the fourth lens is a negative meniscus lens with its concave surface positioned toward the object side and the fifth lens is a positive meniscus lens with its concave surface positioned toward the object side.

$r_1=\infty$
$d_1=2.7726$   $n_1=1.547$   $\nu_1=54.0$
$r_2=-5.6308$
$d_2=0.2500$
$r_3=15.9099$
$d_3=2.2050$   $n_2=0.0672$   $\nu_2=64.0$
$r_4=-14.0644$
$d_4=1.9386$
$r_5=5.4115$
$d_5=3.7500$   $n_3=1.667$   $\nu_3=33.0$
$r_6=3.4870$
$d_6=3.8136$
$r_7=-2.8396$
$d_7=3.5075$   $n_4=1.667$   $\nu_4=33.0$
$r_8=-5.2742$
$d_8=0.2500$
$r_9=-69.2660$
$d_9=3.0721$   $n_5=1.667$   $\nu_5=33.0$
$r_{10}=-10.2729$
$f=13.1297$   $f_3=-66.667$   $f_4=-21.786$
RMS wavefront error$=0.021$   $I=2$

It will be seen that the objective lens satisfies the following conditions. (Reference symbol f represents the focal length of the lens system as a whole. Reference symbol $f_3$ represents the focal length of the third lens. Reference symbol $f_4$ represents the focal length of the fourth lens. Reference symbol $r_6$ represents the radius of curvature of the surface on the image side of the third lens. Reference symbol $r_7$ represents the radius of curvature of the surface on the object side of the fourth lens. Reference symbol $d_1$ represents the thickness of the first lens and reference symbol $d_5$ represents the thickness of the third lens):—

**0 014 549**

1. $0.30 \geq r_6/f \geq 0.23$
2. $0.27 \geq d_1/f \geq 0.15$
3. $1.4 \geq r_6/r_7 \geq 0.9$
4. $6.0 \geq f_3/f_4 \geq 2.5$
5. $0.31 \geq d_5/f \geq 0.21$

The values of the symbols are numerical values regardless of sign.

If $r_6/f$ becomes larger than the upper limit of the condition (1) i.e. $r_6/f > 0.30$, distortion will increase and spherical aberration in the zonal and marginal portions will be overcorrected. When on the contrary, $r_6/f$ becomes smaller than the lower limit, i.e. $r_6/f < 0.23$ astigmatism will be undercorrected. When $d_1/f$ becomes greater than 0.27, the working distance becomes short. Moreover, spherical aberration will be undercorrected and the astigmatic difference becomes large. When on the contrary $d_1/f$ becomes less than 0.15, coma and spherical aberration in the marginal portion will become unfavourable though the working distance becomes large. It is this condition which corrects additional spherical aberrations introduced by subsequent elements interposed in the long conjugate of the objective lens.

If $r_6/r_7$ becomes greater than 1.4 in the condition (3), spherical aberration and coma will be overcorrected. If it becomes less than 0.9, coma will be somewhat undercorrected. If f3/f4 becomes less than 2.5 in the condition (4), coma and spherical aberration in the marginal portion will become large. If it becomes greater than 6.0, symmetry of coma will become unfavourable. Moreover, astigmatism will be undercorrected and will increase in a negative direction toward the marginal portion. If, in the condition (5), $d_5/f$ becomes greater than 0.31, spherical aberration will be somewhat overcorrected and, at the same time, the astigmatic difference becomes large. If, on the contrary, it becomes less than 0.21, coma will be somewhat overcorrected.

The invention may be carried into practice in various ways, and one embodiment will be described by way of example with reference to the accompanying drawings in which:—

Figure 1 shows a sectional view of an objective lens according to the present invention;

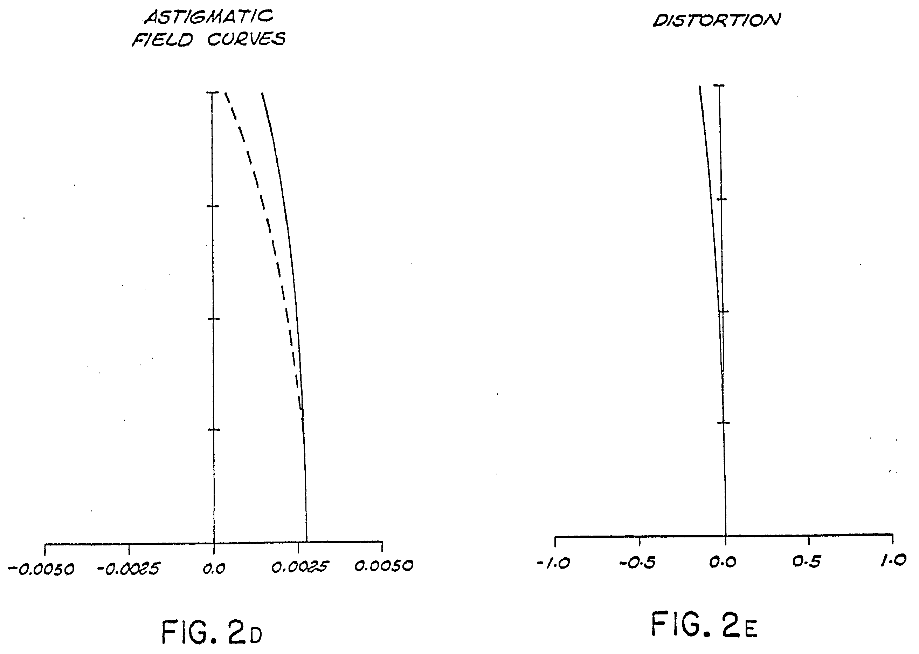

Figures 2A, 2B, 2C, 2D, and 2E, respectively show graphs illustrating aberration curves of the present invention.

The component lens is made up of first, second, third, fourth, and fifth, single lenses in order from a plane object glass. The characteristics are as follows:—

$r_1 = \infty$
$d_1 = 2.7726 \quad n_1 = 1.547 \quad \nu_1 = 54.0$
$r_2 = -5.6308$
$d_2 = 0.2500$
$r_3 = 15.9099$
$d_3 = 2.2050 \quad n_2 = 0.672 \quad \nu_2 = 64.0$
$r_4 = -14.0644$
$d_4 = 1.9386$
$r_5 = 5.4115$
$d_5 = 3.7500 \quad n_3 = 1.667 \quad \nu_3 = 33.0$
$r_6 = 3.4870$
$d_6 = 3.8136$
$r_7 = -2.8396$
$d_7 = 3.5075 \quad n_4 = 1.667 \quad \nu_4 = 33.0$
$r_8 = -5.2742$
$d_8 = 0.2500$
$r_9 = -69.2660$
$d_9 = 3.0721 \quad n_5 = 1.667 \quad \nu_5 = 33.0$
$r_{10} = -10.2729$
$f = 13.1297 \quad f_3 = -66.667 \quad f_4 = -21.786$
$R_{MS}$ wavefront errors = .021 \quad I = 2

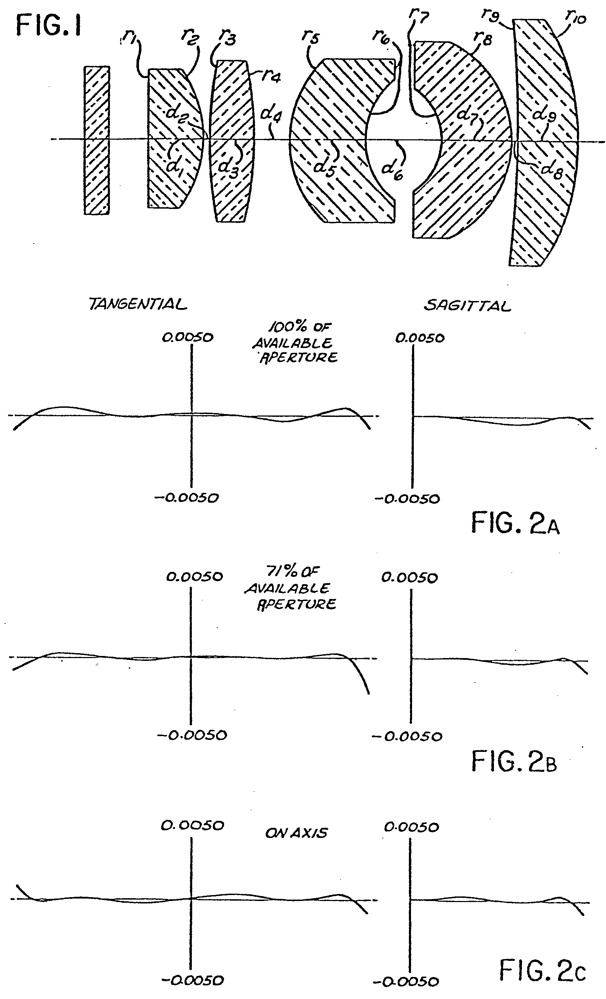

In the above mentioned embodiment, reference symbols $r_1$ through $r_{10}$, respectively, represent radii of curvature of respective lens surfaces. Reference symbols $d_1$ through $d_9$, respectively, represent thicknesses of respective lenses and air spaces between respective lenses. Reference symbols $n_1$ through $n_5$, respectively, represent refractive indices of the material of respective lenses. Reference symbols $\nu_1$ through $\nu_5$, respectively, represent Abbe's numbers of respective lenses. Reference symbol f represents the focal length of the lens system as a whole. Reference symbol $f_3$ represents the focal length of the third lens. Reference symbol $f_4$ represents the focal length of the fourth lens and reference symbol I represents the working distance of the lens system. The negative values indicate that the measurements are to the left of Figure 1 of the lens concerned.

**Claim**

An objective lens for reading videodiscs comprising in order from the object side, first, second, third, fourth, and fifth lenses, said first lens being a positive lens, said second lens being a positive lens,

3

said third lens being a negative meniscus lens with its convex surface positioned toward the object side, said fourth lens being a negative meniscus lens with its concave surface positioned toward the object side, and said fifth lens being a positive meniscus lens with its concave surface positioned toward the object side, which lens has the following values:—

$r_1 = \infty$
$d_1 = 2.7726$   $n_1 = 1.547$   $\nu_1 = 54.0$
$r_2 = -5.6308$
$d_2 = 0.2500$
$r_3 = 15.9099$
$d_3 = 2.2050$   $n_2 = 0.0672$   $\nu_2 = 64.0$
$r_4 = -14.0644$
$d_4 = 1.9386$
$r_5 = 5.4115$
$d_5 = 3.7500$   $n_3 = 1.667$   $\nu_3 = 33.0$
$r_6 = 3.4870$
$d_6 = 3.8136$
$r_7 = -2.8396$
$d_7 = 3.5075$   $n_4 = 1.667$   $\nu_4 = 33.0$
$r_8 = -5.2742$
$d_8 = 0.2500$
$r_9 = -69.2660$
$d_9 = 3.0721$   $n_5 = 1.667$   $\nu_5 = 33.0$
$r_{10} = -10.2729$
$f = 13.1297$   $f_3 = -66.667$   $f_4 = -21.786$
RMS wavefront errors $= .021$   $l = 2$

wherein reference symbols $r_1$ through $r_{10}$, respectively, represent radii of curvature of respective lens surfaces, reference symbols $d_1$ through $d_9$, respectively, represent thicknesses of respective lenses and air spaces between respective lenses, reference symbols $n_1$ through $n_5$, respectively, represent refractive indices of the materials of the respective lenses, reference symbols $\nu_1$ through $\nu_5$, respectively, represent Abbe's numbers of respective lenses, reference symbol f represents the focal length of the lens system as a whole, reference symbol $f_3$ represents the focal length of the third lens, reference symbol $f_4$ represents the focal length of the fourth lens and reference symbol l represents the working distance of the lens system as a whole.

**Revendication**

Lentille d'objectif pour lire des disques vidéos comprenant dans l'ordre à partir du côté objet des première, seconde, troisième, quatrième et cinquième lentilles, la dite première lentille étant une lentille positive, la dite seconde lentille étant une lentille positive, la dite troisième lentille étant une lentille ménisque négative avec sa surface convexe placée du côté objet, la dite quatrième lentille étant une lentille ménisque négative avec sa surface concave placée du côté objet, et la dite cinquième lentille étant une lentille ménisque positive avec sa surface concave placée du côté objet, cette lentille d'objectif ayant les valeurs suivantes:

$r_1 = \infty$
$d_1 = 2,7726$   $n_1 = 1,547$   $\nu_1 = 54,0$
$r_s = -5,6308$
$d_2 = 0,2500$
$r_3 = 15,9099$
$d_3 = 2,2050$   $n_2 = 0,0672$   $\nu_2 = 64,0$
$r_4 = -14,0644$
$d_4 = 1,9386$
$r_5 = 5,4115$
$d_5 = 3,7500$   $n_3 = 1,667$   $\nu_3 = 33,0$
$r_6 = 3,4870$
$d_6 = 3,8136$
$r_7 = -2,8396$
$d_7 = 3,5075$   $n_4 = 1,667$   $\nu_4 = 33,0$
$r_8 = -5,2742$
$d_8 = 0,2500$
$r_9 = -69,2660$
$d_9 = 3,0721$   $n_5 = 1,667$   $\nu_5 = 33,0$
$r_{10} = -10,2729$
$f = 13,1297$   $f_3 = -66,667$   $f_4 = -21,786$
valeur effective d'erreurs au front d'onde $= 0,021$   $l = 2$

4

**0 014 549**

où les symboles de référence $r_1$ à $r_{10}$ représentent respectivement les rayons de courbure des surfaces de lentilles respectives, les symboles de référence $d_1$ à $d_9$ représentent respectivement les épaisseurs des lentilles respectives et des expaces d'air entre les lentilles respectives, les symboles de référence $n_1$ à $n_5$ représentent respectivement les indices de réfraction des matières des lentilles respectives, les symboles de référence $v_1$ à $v_5$ représentent respectivement les nombres d'Abbe des lentilles respectives, le symbole de référence f représente la distance focale du système de lentilles en entier, le symbole de référence $f_3$ représente la distance focale de la troième lentille, le symbole de référence $f_4$ représente la distance focale de la quatrième lentille et le symbole de référence I représente la distance de travail du système de lentille en entier.

**Patentanspruch**

Objektivlinse zum Lesen von Videoplatten, welche auf der Objektseite beginnend hintereinander aus folgenden Linsen besteht:

einer 1. Positivlinse;

einer 2. Positivlinse;

einer 3. Linse mit negativem Miniskus, dessen konvexe Oberfläche zur Objektseite ausgerichtet ist;

einer 4. Linse mit negativem Miniskus, dessen konkage Oberfläche zur Objektseite ausgerichtet ist;

einer 5. Linse mit positivem Miniskus, dessen konkave Oberfläche zur Objektseite ausgerichtet ist; wobei folgende Werte gelten:

$r_1 = \infty$
$d_1 = 2,7726 \quad n_1 = 1,547 \quad v_1 = 54,0$
$r_2 = -5,6308$
$d_2 = 0,2500$
$r_3 = 15,9099$
$d_3 = 2,2050 \quad n_2 = 0,0672 \quad v_2 = 64,0$
$r_4 = -14,0644$
$d_4 = 1,9386$
$r_5 = 5,4115$
$d_5 = 3,7500 \quad n_3 = 1,667 \quad v_3 = 33,0$
$r_6 = 3,4870$
$d_6 = 3,8136$
$r_7 = -2,8396$
$d_7 = 3,5075 \quad n_4 = 1,667 \quad v_4 = 33,0$
$r_8 = -5,2742$
$d_8 = 0,2500$
$r_9 = -69,2660$
$d_9 = 3,0721 \quad n_5 = 1,667 \quad v_5 = 33,0$
$r_{10} = -10,2729$
$f = 13,1297 \quad f_3 = -66,667 \quad f_4 = -21,786$
$R_{MS}$ Wellenfrontfehler $= 0,021 \quad I = 2$

dabei bedeuten:

$r_1$ bis $r_{10}$ die Krümmungsradien zugeordneter Linsen;

$d_1$ bis $d_9$ die Dicke der einzelnen Linsen und der Luftspalt zwischen zugeordneten Linsen;

$n_1$ bis $n_5$ Brechungsindices der für die Linsen verwendeten Materialien;

1 bis 5 die Abbe'sche Zahl der zugeordneten Linsen;

f die Brennweite der Objektivlinse als Gesamtsystem;

$f_3$ die Brennweite der dritten Linse;

$f_4$ die Brennweite der vierten Linse;

I die Arbeitsdistanz des Gesamtsystems.

5

FIG.1

TANGENTIAL                    SAGITTAL

0.0050      100% OF          0.0050
            AVAILABLE
            APERTURE

-0.0050                      -0.0050      FIG. 2A

0.0050      71% OF           0.0050
            AVAILABLE
            APERTURE

-0.0050                      -0.0050      FIG. 2B

0.0050      ON AXIS          0.0050

-0.0050                      -0.0050      FIG.2C

1

ASTIGMATIC
FIELD CURVES

DISTORTION

-0.0050   -0.0025   0.0   0.0025   0.0050

-1.0   -0.5   0.0   0.5   1.0

FIG. 2D

FIG. 2E